# EUROPEAN PATENT SPECIFICATION

(11) **EP 3 563 183 B1**
(45) Date of publication and mention of the grant of the patent: **30.09.2020**
(21) Application number: 18822009.9
(22) Date of filing: 26.11.2018
(51) Int. Cl.: G01V 3/165, E21B 7/18

(54) **NON-MAGNETIC HOLLOW POLE WITH MAGNETIC PROBE FOR UNDER WATER DETECTION OF UNEXPLODED ORDNANCE**
NICHTMAGNETISCHE HOHLSTANGE MIT MAGNETISCHER SONDE ZUR DETEKTION VON NICHTEXPLODIERTEN KAMPFMITTELN UNTER WASSER
BARRE CREUSE NON MAGNÉTIQUE À SONDE MAGNÉTIQUE POUR LA DÉTECTION SOUS MARINE DE MUNITIONS NON EXPLOSÉES

(30) Priority: 30.11.2017 IT 201700138461
(43) Date of publication of application: 06.11.2019
(73) Proprietor: Sub Service Srl, 09095 Mogoro (OR) (IT)
(72) Inventor: GARAU, Giulio, 09095 Mogoro (OR) (IT)
(74) Representative: Serravalle, Marco
(86) International application number: PCT/EP2018/082497
(87) International publication number: WO 2019/105874

(56) References cited:
- FR-A1- 2 309 881
- US-A- 4 574 241
- US-A- 4 775 015
- US-B1- 6 206 112
- US-B1- 6 230 972
- -: "EM-Tipped Jet-Probe - ASI Fact Sheet - 1952-09b", , 6 November 2009 (2009-11-06), pages 1-2, XP055497112, Retrieved from the Internet: URL:http://www.aquasurveyinc.com/images/up loads/EM_Jet_Probe_1952_09b.pdf [retrieved on 2018-08-02]

## Description

**.** The present invention is directed to a non-magnetic hollow pole comprising a magnetic probe placed inside the hollow zone, which pole is capable of penetrating the ground thanks to a water jet which exits from the lower tip of the pole.

**.** Furthermore, the invention is directed to a method of searching ferromagnetic objects under water under the plane of sea-, lake- or river-bed, in the context of deep systematic warfare clean-up sites where it is useful/necessary to push the magnetometer sensor underneath the sediment.

**.** In fact, despite more than 70 years have passed from World War II, there is still a high quantity of leftover unexploded ordnance scattered on European ground, emerged and submerged.

**.** At the present, unexploded ordnance survey is performed through drilling by using a non-magnetic pole having inside a magnetic probe. DE 19622592 discloses such a device. Nevertheless, in order to operate with drills, it is essential to support them by maritime means (such as pontoons - platforms) especially in sub-water, lake, lagoon surroundings. This makes said solution often unfeasible due to surroundings impracticability, which results in a slow and very expensive ordnance survey.

**.** The company Aqua Service Inc. produces a device called EM-Tipped Jet-Probe™, which consists of a non-magnetic pole containing a magnetic probe and capable of advancing in sediments by a water jet from the tip. The length of the pole can be from 0.61 m to 12.19 m. From this fact, it is evident that also in this case, it is essential the support of maritime means, since it would be impossible for a diver to operate a pole 12 m long. Furthermore, EM-Tipped Jet-Probe does not have a separate hollow chamber wherein the probe is placed, and it appears that there is a single cavity wherein the probe is located and wherein water flows. It also seems that in this device the probe cannot be moved along its axis.

**.** US 4,574,241 discloses a marine pipeline surveying apparatus useful for locating buried pipelines that includes a barge having a work deck with a dolly mounted on the work deck for movement on the deck upon a provided track.

**.** US 4,775,015 discloses a sliding-weight operated hole boring tool that can be used to make holes of various length or depth in varied soil conditions. A specific tool bit helps to form a smooth, clean hole.

**.** US 6,206,112 discloses a multiple lateral hydraulic drilling apparatus and method in which a hole is formed with a series of drill heads and strings of successively smaller diameter.

FR 2 309 881 describes an hollow pole including a magnetic probe in the proximity of the pole's tip.

**.** Therefore, there is the need of new apparatus for buried leftover unexploded ordnance survey, which are easily transportable, easily put in use and allowing operations in whatever sub-water systematic warfare clean-up lead by a task force.

### Summary of the invention

**.** The present invention is directed to a non-magnetic hollow pole comprising: a connector, capable of connecting the pole to a pressure water hose for water inlet; a hole at one of the tips of the pole which is intended to penetrate the seabed for water outlet; a jacket inside the pole, the jacket forming with the inner surface of the pole a conduit from the connector to the hole wherein water flows, and the inner surface of the jacket forming an hollow inner area; a magnetic probe placed inside the hollow inner area; a magnetometer provided with a control panel connected to the magnetic probe, the non-magnetic hollow pole being characterized in that the magnetic probe is configured to move along the hollow pole axis and execute a measure of magnetic field while moving inside the hollow pole.

**.** The invention is further directed to a system for the detecting ferromagnetic objects, comprising: the above defined hollow pole, a pump, a hose for connecting the pump to the connector.

**.** Finally, the invention is directed to a method for detection of unexploded ordnance under sea floor, the method comprising: providing the above defined system; penetrating the non-magnetic hollow pole in the seabed according to a predetermined grid; determining with the magnetometer the presence of an ordnance, the method further comprising the step of: when an ordnance is detected, moving the magnetic probe (108) of the hollow pole (100) up and down along the pole axis, to determine the burying depth of the ordnance.

### Detailed description of the invention

**.** The present invention is also directed to a device for ferromagnetic object survey e.g. "potential buried ordnance" said device comprising: a non-magnetic material hollow pole as above described; a magnetometric control unit connected to the magnetic probe; a hose for under pressure water connecting the hollow pole to a pump; and a pump.

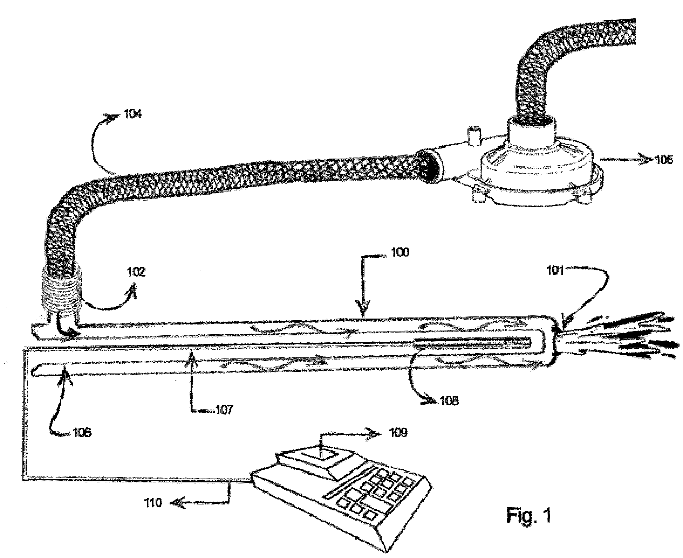

**.** With reference to Fig. 1, the hollow pole 100 presents a hole 101 on the tip for water outlet, an inlet nozzle 102, preferably threaded, to connect the pole to a hose 104 for under pressure water coming from pump 105. Water flows inside jacket 106 which is present in the pole, while the inner area 107 contains magnetic probe 108 preferably placed closer to the tip inwardly cave zone 107 and connected to magnetometric control unit 109, preferably through cable 110.

**.** The length of hollow pole 100 preferably ranges from 1 to 7 m, more preferably from 1 to 6 m.

. The diameter of pole 100 can vary depending on the length, as well as land or seabed type the pole must penetrate. In fact, the diameter of the pole influences the thickness of the jacket, which in turn defines the loss of pressure to deliver water to the tip. The bigger is the diameter of the pole, thus thickness of the jacket, the lower is the loss of pressure. Preferably, the diameter of the pole is comprised between 60 mm and 120 mm.

. The diameter of hole 101 can vary through a quite broad range, depending on the surrounding where the pole is used. Preferably, the diameter of hole 101 is comprised between 10 mm and 20 mm.

. All commercially available magnetometers are usable within the present invention, provided that it is possible to introduce its probe inside the hollow pole. Preferably, a coil magnetometer is used, such as for example Ferex™ 4021 or Ferex™ 4032 by Foerster.

**.** By non-magnetic material it is intended a non-magnetizable material, i.e. with magnetic relative permeability barely different from the unit (essentially, all non-ferromagnetic or ferrimagnetic materials). Non-limiting examples usable in the present invention are bronze, copper, aluminium, austenitic stainless steel and PVC.

**.** As previously said, the non-magnetic pole is connected to a pump granting a flow from hole 101 under a pressure at least 3 bar higher than hydrostatic or environmental one, preferably at least 5 bar, even more preferably at least 7 bar. In fact, water pressure at hole 101 grants seabed penetration capacity. It should be taken into account that in case of unexploded ordnance, the survey is concentrated on sandy or non-rocky seabeds, as we are considering ordnances buried even 5/6 meters under sand or other non-rocky material. It is thus mandatory that probes can deeply penetrate and measure the magnetic field underneath the seabed up to the necessary depth.

. The pump flow rate can vary in a quite wide range, according to the dimension of pole 100 hole 101. Nevertheless, generally it is comprised between 300 1/h e 3000 1/h, more preferably between 500 1/h and 1500 1/h.

. In submerged non-rocky seabeds, the probe can be pushed from a diver, by applying a light shove, thanks to disruptive action of water flow on seabed. As the hollow pole lower end penetrates the seabed, water tends to exit the hole along the external walls of the pole washing the hole from removed debris, thus creating a low friction sliding buffer along the entire drilling depth.

**.** The use of the described hollow pole in warfare clean up and magnetometric survey creates safety conditions during penetrations, as a result of the light pressure the diver applies on the pole during "hand-operated" penetration, also in highly contaminated fields where ordnance presence is extremely massive. In fact, even when crossing a high sensible buried ordnance, the operator gets a refusal for line obstruction, said refusal being absolutely unable to trigger an ordnance.

**.** The continued presence of magnetometric probe hosted on its lower end and the possibility of sliding it along the whole hollow pole, allow to measure in real-time the radial and underneath magnetic field variation, facilitating measurement activities both during penetration of the pole and at the maximum depth. In fact, the method for detection and determination of the position of the ordnance consists of two steps. The first step is the penetration of the pole in the seabed in order to determine the presence of an ordnance. When an ordnance is detected, the second step consists of moving the probe up and down along the pole axys to evaluate the polarity change level of found radial masses, to determine the exact burying depth and the magnetic field dimension, useful to define the final position of found masses.

. Systematic warfare clean-up is compulsory on areas subjected to land-movement works, dredging, drilling, pole laying, secant laying, etc. which will be defined as "Underground Intrusion Activity". Ground/seabeds non-magnetic hollow pole intrusion, subject of the patent, doesn't represent war threat not even in fields of evident buried ordnance dispersion thanks to its double action of:
- "non-mechanical invasive" hand-operated penetration,
- Penetration supervised by constant magnetometric timely monitoring.

This technology offers depth-implementation advantages amongst the activity of magnetometric survey, normally performed trough handheld magnetometers "Ferex™ 4021 - Ferex™ 4032 - Ebinger M120 LW with probe hauled on submarine ground widening the thickness of detected debris layer.

## Claims

1. A non-magnetic hollow pole (100) comprising:
a. a connector (102), capable of connecting the pole to a pressure water hose for water inlet,
b. a hole (101) at one of the tips of the pole which is intended to penetrate the seabed for water outlet,
c. a jacket (106) inside the pole, the jacket forming with the inner surface of the pole a conduit from the connector (102) to the hole (101) wherein water flows, and the inner surface of the jacket forming an hollow inner area (107),
d. a magnetic probe (108) placed inside the hollow inner area (107),
e. a magnetometer (109) provided with a control panel connected to the magnetic probe (108),
the non-magnetic hollow pole being **characterized in that**:
the magnetic probe (108) is configured to move along the hollow pole axis and execute a measure of magnetic field while moving inside the hollow pole.

2. The hollow pole according to claim 1, wherein the non-magnetic material is selected from aluminium, austenitic stainless steel, PVC.

3. The hollow pole according to claims 1 or 2, wherein the probe is an inductive pickup coils magnetometer probe.

4. A system for the detecting ferromagnetic objects, comprising:
i. the hollow pole (100) according to claims 1-3,
ii. a pump (105);
iii. a hose (104) for connecting pump (105) to connector (102).

5. The system according to claim 4, wherein probe (108) is connected to magnetometer (109) through an underwater cable (110).

6. The system according to claims 4 or 5 wherein the pump has a prevalence of at least 3 bar, preferably at least 7 bar, with respect to hydrostatic pressure or atmospheric pressure where on the ground.

7. The system according to claims 4-5, wherein the flow rate of the pump during functioning of the system is comprised between 300 1/h and 3000 1/h.

8. A method for detection of unexploded ordnance under sea floor, the method comprising:
i. providing the system of claims 4-7;
ii. penetrating the non-magnetic hollow pole (100) in the seabed according to a predetermined grid;
iii. determining with the magnetometer (109) the presence of an ordnance;
the method further comprising the step of:
iv. when an ordnance is detected, moving the magnetic probe (108) of the hollow pole (100) up and down along the pole axys, to determine the burying depth of the ordnance.

## Patentansprüche

1. Nichtmagnetische Hohlstange (100), umfassend:
a. einen Verbinder (102), der fähig ist, die Stange mit einem Druckwasserschlauch für einen Wassereinlass zu verbinden,
b. ein Loch (101) an einer der Spitzen der Stange, das den Meeresboden für einen Wasserauslass penetrieren soll,
c. einen Mantel (106) innen in der Stange, wobei der Mantel, mit der Innenfläche der Stange, eine Leitung von dem Verbinder (102) zu dem Loch (101) bildet, worin Wasser fließt, und die Innenfläche des Mantels einen hohlen Innenbereich (107) bildet,
d. eine magnetische Sonde (108), die innen in dem hohlen Innenbereich (107) platziert ist,
e. ein Magnetometer (109), das mit einem mit der magnetischen Sonde (108) verbundenen Bedienfeld versehen ist,
wobei die nichtmagnetische Hohlstange **dadurch gekennzeichnet ist, dass**:
die magnetische Sonde (108) dafür konfiguriert ist, sich die Hohlstangenachse entlang zu bewegen und während der Bewegung innen in der Hohlstange eine Magnetfeldmessung auszuführen.

2. Hohlstange nach Anspruch 1, wobei das nichtmagnetische Material ausgewählt ist aus Aluminium, austenitischem rostfreiem Stahl, PVC.

3. Hohlstange nach Anspruch 1 oder 2, wobei die Sonde eine Magnetometersonde mit induktiven Aufnahmespulen ist.

4. System zum Nachweis von ferromagnetischen Objekten, umfassend:
i. die Hohlstange (100) nach Anspruch 1-3,
ii. eine Pumpe (105);
iii. einen Schlauch (104) zum Verbinden von Pumpe (105) mit Verbinder (102).

5. System nach Anspruch 4, wobei Sonde (108) mit Magnetometer (109) durch ein Unterwasserkabel (110) verbunden ist.

6. System nach Anspruch 4 oder 5, wobei die Pumpe eine Prävalenz von mindestens 3 bar, bevorzugt mindestens 7 bar, mit Bezug auf hydrostatischen Druck oder atmosphärischen Druck, wo auf dem Boden, aufweist.

7. System nach Anspruch 4-5, wobei die Flussrate der Pumpe während des Betriebs des Systems zwischen 300 l/h und 3000 l/h umfasst.

8. Verfahren zum Nachweis von nichtexplodierten Kampfmitteln unter dem Meeresboden, wobei das Verfahren umfasst:
i. Bereitstellen des Systems nach Anspruch 4-7;
ii. Penetrieren der nichtmagnetischen Hohlstange (100) in den Meeresboden nach einem vorbestimmten Raster;
iii. Bestimmen, mit dem Magnetometer (109), des Vorhandenseins eines Kampfmittels;
wobei das Verfahren ferner den folgenden Schritt umfasst:
iv. wenn ein Kampfmittel detektiert wird, Auf-und-ab-Bewegen der magnetischen Sonde (108) der Hohlstange (100) entlang der Stangenachse, um die Eingrabungstiefe des Kampfmittels zu bestimmen.

## Revendications

1. Barre creuse non magnétique (100) comprenant :
a. un raccord (102), capable de relier la barre à un tuyau d'eau sous pression pour l'arrivée d'eau,
b. un trou (101) à l'une des extrémités de la barre destiné à pénétrer le fond marin pour la sortie d'eau,
c. une chemise (106) à l'intérieur de la barre, la chemise formant, avec la surface intérieure de la barre, un conduit du raccord (102) au trou (101) dans lequel l'eau s'écoule, et la surface intérieure de la veste formant une zone intérieure creuse (107),
d. une sonde magnétique (108) placée à l'intérieur de la zone intérieure creuse (107),
e. un magnétomètre (109) pourvu d'un panneau de commande relié à la sonde magnétique (108),
la barre creuse non magnétique étant **caractérisée en ce que** :
la sonde magnétique (108) est conçue pour se déplacer le long de l'axe de la barre creuse et exécuter une mesure de champ magnétique en se déplaçant à l'intérieur de la barre creuse.

2. Barre creuse selon la revendication 1, dans laquelle le matériau non magnétique est choisi parmi l'aluminium, l'acier inoxydable austénitique, le PVC.

3. Barre creuse selon les revendications 1 ou 2, dans laquelle la sonde est une sonde magnétométrique à bobines de détection inductive.

4. Système de détection d'objets ferromagnétiques, comprenant :
i. la barre creuse (100) selon les revendications 1 à 3,
ii. une pompe (105) ;
iii. un tuyau (104) pour relier la pompe (105) au raccord (102).

5. Système selon la revendication 4, dans lequel la sonde (108) est reliée au magnétomètre (109) par l'intermédiaire d'un câble sous-marin (110).

6. Système selon les revendications 4 ou 5, dans lequel la pompe a une prévalence d'au moins 3 bars, de préférence d'au moins 7 bars, par rapport à la pression hydrostatique ou à la pression atmosphérique lorsqu'elle est au sol.

7. Système selon les revendications 4 à 5, dans lequel le débit de la pompe pendant le fonctionnement du système est compris entre 300 l/h et 3 000 l/h.

8. Procédé de détection de munitions non explosées sous le lit marin, le procédé comprenant :
i. la fourniture du système des revendications 4 à 7 ;
ii. la pénétration de la barre creuse non magnétique (100) dans le fond marin selon une grille prédéterminée ;
iii. la détermination, au moyen du magnétomètre (109), de la présence d'une munition ;
le procédé comprenant en outre l'étape consistant à :
iv. lorsqu'une munition est détectée, déplacer la sonde magnétique (108) de la barre creuse (100) vers le haut et vers le bas le long de l'axe de la barre, pour déterminer la profondeur d'enfouissement de la munition.
